# EUROPÄISCHE PATENTSCHRIFT

(11) **EP 3 938 133 B1**
(45) Veröffentlichungstag und Bekanntmachung des Hinweises auf die Patenterteilung: **26.06.2024**
(21) Anmeldenummer: 20710497.7
(22) Anmeldetag: 10.03.2020
(51) Int. Cl.: B23D 59/00, B23Q 9/00, B23D 47/02, B23D 51/02

(54) **BEFESTIGUNGSVORRICHTUNG UND SYSTEM**
FASTENING APPARATUS AND SYSTEM
DISPOSITIF ET SYSTÈME DE FIXATION

(30) Priorität: 12.03.2019 DE 102019203355
(43) Veröffentlichungstag der Anmeldung: 19.01.2022
(73) Patentinhaber: Festool GmbH, 73240 Wendlingen am Neckar (DE)
(72) Erfinder: SPENGLER, Wolfgang, 73272 Neidlingen (DE); WEIK, Jonathan, 70794 Filderstadt (DE)
(74) Vertreter: Patentanwälte Magenbauer & Kollegen Partnerschaft mbB
(86) Internationale Anmeldenummer: PCT/EP2020/056314
(87) Internationale Veröffentlichungsnummer: WO 2020/182796

(56) Entgegenhaltungen:
- EP-A1- 2 140 970
- DE-U1-202014 101 724
- US-A- 6 158 666
- US-A1- 2018 036 849

## Beschreibung

Die Erfindung betrifft eine Anordnung mit einer Befestigungsvorrichtung für eine Funktionseinheit. Die Funktionseinheit umfasst eine Führungseinrichtung.

Die Befestigungsvorrichtung dient insbesondere dazu, die Funktionseinheit lösbar an einem Werkstück zu befestigen. Die Funktionseinheit umfasst eine Führungseinrichtung, und zwar eine Führungsschiene, eine Oberfräseführung, eine Frässchablone und/oder eine Rollführungsschiene. Die Führungseinrichtung dient beispielsweise zur Führung eines Elektrowerkzeug, insbesondere einer Säge, relativ zum Werkstück.

Die US 2018/0036849 A1 beschreibt eine Schneidführung. Eine Schiene, an der ein Schneidwerkzeug geführt werden kann, ist über zwei drehbar gelagerte Stützelemente an einer Kontrollplatte befestigt. An einem ersten Stützelement, das sich senkrecht von der Kontrollplatte nach oben erstreckt, ist ein Balken befestigt, an dem ein Saugnapf angebracht ist.

Die EP 2 140 970 A1 beschreibt eine Saugeinrichtung zum Fixieren eines Führungsschienenelements für elektrische Bearbeitungsmaschinen auf einer Arbeitsfläche mittels Unterdruck. Die Saugeinrichtung weist einen Saugschuh auf, der einen Anschlussstutzen zum Anschließen der Saugeinrichtung an eine Unterdruckquelle und eine Haube umfasst, welche mit dem Anschlussstutzen in Strömungsverbindung steht.

Die DE 10 2005 009315 A1 betrifft eine Befestigungseinrichtung.

Die DE 20 2006 001691 U1 betrifft eine Vorrichtung mit einem Saugnapf zum Halten und Montieren von Gegenständen an einer Oberfläche.

Die US 2015/003927 A1 betrifft eine tragbare Vorrichtung zum Bohren von Löchern, die eine Plattform aufweist.

Die US 2002/043599 A1 betrifft eine motorisierte Saugeinrichtung.

Eine Aufgabe der Erfindung besteht darin, eine besser handhabbare Befestigungsvorrichtung bereitzustellen.

Die Aufgabe wird gelöst durch die Anordnung gemäß Anspruch 1. Erfindungsgemäß wird eine Befestigungsvorrichtung für eine Funktionseinheit bereitgestellt. Die Befestigungsvorrichtung umfasst ein Gehäuse, einen außen am Gehäuse angeordneten Ansaugbereich mit dem sich die Befestigungsvorrichtung lösbar an einer Unterlage befestigen lässt, und eine im Gehäuse angeordnete elektrisch betriebene Unterdruckeinheit, die ausgebildet ist, im Ansaugbereich einen Unterdruck bereitzustellen. Die Befestigungsvorrichtung umfasst ferner wenigstens eine Befestigungs-Schnittstelle zur Befestigung der Funktionseinheit. Die Anordnung umfasst die Funktionseinheit. Die Funktionseinheit umfasst eine Führungseinrichtung, und zwar eine Führungsschiene, eine Oberfräseführung, eine Frässchablone und/oder eine Rollführungsschiene.

Dadurch, dass die Befestigungsvorrichtung über eine elektrisch betriebene Unterdruckeinheit verfügt, kann die Bereitstellung des Unterdrucks im Ansaugbereich - und damit die Befestigung der Befestigungsvorrichtung an der Unterlage - zuverlässiger und komfortabler erfolgen, als dies üblicherweise mit einem Saugnapf möglich ist. Folglich kann die Handhabbarkeit verbessert werden.

Vorteilhafte Weiterbildungen sind Gegenstand der Unteransprüche.

Die Erfindung betrifft ferner eine Befestigungsvorrichtung gemäß Anspruch 21 und ein Verfahren gemäß Anspruch 22.

Weitere Details und bevorzugte Ausgestaltungen werden nachstehend unter Bezugnahme auf die Figuren erläutert. Dabei zeigt:
- Figur 1: eine Anordnung aus einer Befestigungsvorrichtung, einer Funktionseinheit, einer Unterlage und einem Werkzeug,
- Figur 2: eine Befestigungsvorrichtung,
- Figur 3: eine Anordnung aus einer Befestigungsvorrichtung und einer Führungsschiene,
- Figur 4: eine Anordnung aus einer Befestigungsvorrichtung mit abnehmbarem Befestigungsabschnitt und einer Führungsschiene,
- Figur 5: eine Anordnung aus einer Befestigungsvorrichtung und einer Führungsschiene, wobei die Führungsschiene an einer ersten Befestigungsschnittstelle angebracht ist,
- Figur 6: eine Anordnung aus einer Befestigungsvorrichtung und einer Führungsschiene, wobei die Führungsschiene an einer zweiten Befestigungsschnittstelle angebracht ist,
- Figur 7: eine Schnittdarstellung einer Anordnung aus einer Befestigungsvorrichtung und einer Führungsschiene,
- Figur 8: ein vergrößerter Ausschnitt aus der Schnittdarstellung der Figur 7,
- Figur 9: eine Schnittdarstellung eines Abschnitts einer Befestigungsvorrichtung, der einen Sensor und eine Dichtungs- und/oder Auflage-Anordnung umfasst,
- Figur 10: eine Ansicht von unten auf eine Befestigungsvorrichtung mit einem Ansaugbereich, der mehrere Ansaugabschnitte umfasst,
- Figur 11: eine Ansicht von unten auf eine Befestigungsvorrichtung mit einem inneren und einem äußeren Dichtungsabschnitt gemäß einer ersten Variante,
- Figur 12: eine Ansicht von unten auf eine Befestigungsvorrichtung mit einem inneren und einem äußeren Dichtungsabschnitt gemäß einer zweiten Variante,
- Figur 13: eine Ansicht von unten auf eine Befestigungsvorrichtung mit mehreren, an verschiedenen Seiten angeordneten Ansaugbereichen,
- Figur 14: eine Ansicht von oben auf die Befestigungsvorrichtung mit den mehreren Ansaugbereichen,
- Figur 15: eine Befestigungsvorrichtung mit mehreren Befestigungseinheiten.

Bei den nachfolgenden Erläuterungen wird Bezug genommen auf die orthogonal zueinander ausgerichteten Raumrichtungen "x-Richtung", "y-Richtung" und "z-Richtung". Eine Unterscheidung zwischen einer positiven und einer negativen Richtung wird nicht vorgenommen.

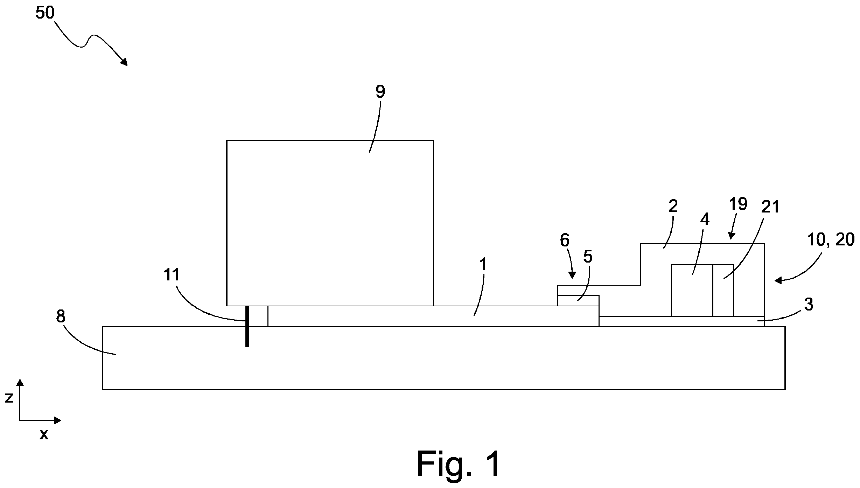

Die Figur 1 zeigt eine Anordnung 50 aus einer Befestigungsvorrichtung 10, einer Funktionseinheit 1, einer Unterlage 8 und einem Werkzeug 9.

Die Anordnung 50 stellt eine exemplarische Einsatzumgebung für die Befestigungsvorrichtung 10 dar. Zweckmäßigerweise kann die Befestigungsvorrichtung 10 auch für sich genommen bereitgestellt werden.

Die Befestigungsvorrichtung 10 dient zur Befestigung der Funktionseinheit 1. Exemplarisch handelt es sich bei der Funktionseinheit 1 um ein Werkzeugzubehör, insbesondere um eine Führungseinrichtung, wie beispielsweise eine Führungsschiene.

Die Befestigungsvorrichtung 10 umfasst ein Gehäuse 2 und einen außen am Gehäuse 2 angeordneten Ansaugbereich 3 mit dem sich die Befestigungsvorrichtung 10 lösbar an der Unterlage befestigen lässt. Die Befestigungsvorrichtung 10 umfasst ferner eine im Gehäuse 2 angeordnete elektrisch betriebene Unterdruckeinheit 4, die ausgebildet ist, im Ansaugbereich 3 einen Unterdruck bereitzustellen. Die Befestigungsvorrichtung 10 umfasst ferner eine Befestigungs-Schnittstelle 5 zur Befestigung der Funktionseinheit 1.

Im Folgenden sollen weitere exemplarische Details erläutert werden.

### Zunächst zum Grundaufbau der Anordnung 50:

Wie bereits erwähnt ist die Funktionseinheit 1 vorzugsweise als Führungseinrichtung, insbesondere als Führungsschiene ausgeführt. Alternativ kann es sich bei der Funktionseinheit 1 auch um ein Werkzeug, (ein anderes) Werkzeugzubehör, und/oder um eine Beleuchtungsvorrichtung handeln. Die Funktionseinheit 1 kann insbesondere als Oberfräseführung, Frässchablone, Rollführungsschiene, Bohrvorrichtung, Lampe und/oder Streiflicht ausgeführt sein.

Die als Führungseinrichtung ausgebildete Funktionseinheit 1 definiert einen Führungspfad, entlang dem ein Werkzeug 9 geführt werden kann. Exemplarisch verläuft der Führungspfad in y-Richtung - also normal zur Zeichenebene der Figur 1. Beispielsweise umfasst die Führungseinrichtung eine Führungsstruktur, beispielsweise eine Führungsnut und/oder einen Führungsvorsprung, die den Führungspfad definiert, und entlang welcher Führungsstruktur das Werkzeug 9 sicher geführt werden kann. Das Werkzeug 9 steht dabei mit der Führungseinrichtung zweckmäßigerweise derart in Eingriff, dass der Bewegungsfreiheitsgrad des Werkzeugs 9 in einer von der Richtung des Führungspfad verschiedenen Richtung, exemplarisch in x-Richtung, gesperrt ist.

Die Führungseinrichtung ist zweckmäßigerweise leistenförmig ausgeführt. Die Führungseinrichtung ist mit ihrer flächenmäßig größten Seite normal zur z-Richtung ausgerichtet. Die nach oben ausgerichtete Seite der Führungseinrichtung soll nachstehend auch als Führungseinrichtungs-Oberseite bezeichnet werden und die nach unten ausgerichtete Seite als Führungseinrichtungs-Unterseite. Auf die Führungseinrichtungs-Oberseite ist das Werkzeug 9 aufgesetzt. Mit der Führungseinrichtungs-Unterseite liegt die Führungseinrichtung auf der Unterlage 8 auf.

Bei dem Werkzeug 9 handelt es sich vorzugsweise um ein Elektrowerkzeug, insbesondere um ein handgeführtes Elektrowerkzeug. Exemplarisch handelt es sich bei dem Werkzeug 9 um eine Säge mit einem Sägeblatt 11. Das Sägeblatt 11 ist in x-Richtung neben der Funktionseinheit 1 angeordnet und verläuft von dem Gehäuse des Werkzeugs 9 zu der Unterlage 8. Die Sägeblatt-Ebene des Sägeblatts 11 ist normal zur x-Richtung ausgerichtet. Alternativ kann das Werkzeug 9 auch als Fräse ausgeführt sein.

Die Unterlage 8 ist zweckmäßigerweise ein Werkstück, das mit dem Werkzeug 9 bearbeitet werden soll. Wie in der Figur 1 gezeigt, sägt das Sägeblatt 11 in die Unterlage 8. Gemäß einer alternativen Ausgestaltung kann die Unterlage 8 einen Auflageabschnitt umfassen, der nicht mit dem Werkzeug 9 bearbeitet werden soll. Ferner kann die Unterlage 8 auch insgesamt als nicht zu bearbeitender Auflageabschnitt - beispielsweise als Auflagetisch - ausgeführt sein. Beispielsweise, kann es sich bei dem x-Abschnitt der Unterlage 8, auf dem die Befestigungsvorrichtung 10 und/oder die Funktionseinheit 1 aufliegt, teilweise oder vollständig um einen Auflageabschnitt, insbesondere einen Auflagetisch, handeln. Das zu bearbeitende Werkstück wäre dann exemplarisch in x-Richtung an den Auflageabschnitt angesetzt, so dass in einem Zustand, in dem das Werkzeug 9 auf der Funktionseinheit 1 aufgesetzt ist, das Werkstück mit dem Werkzeug 9 bearbeitet werden kann.

Im Folgenden soll näher auf die Befestigungsvorrichtung 10 eingegangen werden.

Die Befestigungsvorrichtung 10 umfasst das Gehäuse 2, bei dem es sich zweckmäßigerweise um das Außengehäuse der Befestigungsvorrichtung 10 handelt. In der in der Figur 1 gezeigten Orientierung der Befestigungsvorrichtung 10 befindet sich der Ansaugbereich 3 an der Unterseite des Gehäuses 2. Die Befestigungsvorrichtung 10 liegt mit dem Ansaugbereich 3 auf der Unterlage 8 auf.

Die Befestigungsvorrichtung 10 umfasst einen Hauptabschnitt 19 und einen Befestigungsabschnitt 6. Das Gehäuse 2, insbesondere der Hauptabschnitt 19, ist vorzugsweise aus Kunststoff, Magnesium und/oder Aluminium gefertigt. Der Hauptabschnitt 19 weist exemplarisch eine quaderförmige Grundgestalt auf. Der Hauptabschnitt 19 verfügt über eine der Funktionseinheit 1 zugewandte Vorderseite und eine entgegengesetzt zur Vorderseite ausgerichtete Rückseite. Die Vorderseite und/oder die Rückseite sind zweckmäßigerweise normal zur x-Richtung ausgerichtet. Der Hauptabschnitt 19 verfügt ferner über eine erste Querseite und eine dazu entgegengesetzt ausgerichtete zweite Querseite, die zweckmäßigerweise normal zur y-Richtung ausgerichtet sind. Ferner umfasst der Hauptabschnitt 19 eine Oberseite und eine dazu entgegengesetzt ausgerichtete Unterseite, die normal zur z-Richtung ausgerichtet sind.

Ausgehend von der Vorderseite des Hauptabschnitts 19 erstreckt sich in x-Richtung der Befestigungsabschnitt 6. Der Befestigungsabschnitt 6 ist exemplarisch flach ausgeführt. Der Befestigungsabschnitt 6 ist insbesondere plattenförmig oder leistenförmig ausgeführt. Insbesondere ist der Befestigungsabschnitt 6 ein sich in x-Richtung erstreckender Vorsprung. Vorzugsweise ist der Befestigungsabschnitt 6 mit seiner flächenmäßig größten Seite normal zur z-Richtung ausgerichtet. Der Befestigungsabschnitt 6 ist in z-Richtung in einem unteren Bereich der Befestigungsvorrichtung 10 angeordnet.

Die Befestigungsvorrichtung 10 kann insbesondere werkzeuglos an der Führungsschiene angebracht werden. Die Anbringung erfolgt insbesondere mittels eines L-förmig Nutensteins 12, welcher in eine Befestigungsnut 22 der Führungsschiene eingehängt werden kann. Der Nutenstein 12 kann auch als Ausformung bezeichnet werden.

Der Befestigungsabschnitt 6 befindet sich zumindest teilweise in z-Richtung oberhalb der als Führungseinrichtung ausgebildeten Funktionseinheit 1, insbesondere oberhalb der Führungseinrichtungs-Oberseite. Der Befestigungsabschnitt 6 nimmt zumindest teilweise denselben x-Bereich ein wie die Funktionseinheit 1. Zweckmäßigerweise liegt die Unterseite des Befestigungsabschnitts 6 auf der Oberseite der Funktionseinheit 1 auf. Über den Befestigungsabschnitt 6 wird die Funktionseinheit 1 zweckmäßigerweise in z-Richtung relativ zur Unterlage 8 fixiert. Insbesondere wird die Funktionseinheit 1 zwischen dem Befestigungsabschnitt 6 und der Oberseite der Unterlage 8 eingeklemmt. An dem Befestigungsabschnitt 6, insbesondere an dessen Unterseite, befindet sich die Befestigungs-Schnittstelle 5, die zweckmäßigerweise in Eingriff mit der Funktionseinheit 1, insbesondere mit einer Befestigungsstruktur der Funktionseinheit 1, steht.

Die Befestigungsvorrichtung 10 ist somit ausgebildet, in einem Zustand, in dem die Befestigungsvorrichtung 10 an der Unterlage 8 befestigt ist, die Funktionseinheit 1 in einer an der Unterlage 8 angelegten Stellung zu halten, insbesondere zu klemmen.

Die Befestigungsvorrichtung 10 ist über den im Ansaugbereich 3 bereitgestellten Unterdruck an der Oberseite der Unterlage 8 befestigt. Insbesondere ist die Befestigungsvorrichtung 10 über den im Ansaugbereich 3 bereitgestellten Unterdruck zweckmäßigerweise in sämtlichen Raumrichtungen relativ zur Unterlage 8 fixiert.

Gemäß einer alternativen, in den Figuren nicht gezeigten Ausgestaltung ist die Funktionseinheit 1 integraler Teil der Befestigungsvorrichtung 10 und insbesondere nicht von der Befestigungsvorrichtung 10 abnehmbar. Bei dieser alternativen Ausgestaltung umfasst die Befestigungsvorrichtung 10 zweckmäßigerweise keinen Befestigungsabschnitt 6 und/oder keine Befestigungsschnittstelle 5.

Der Ansaugbereich 3 erstreckt sich in x-Richtung und/oder y-Richtung zweckmäßigerweise über einen Großteil, also über mehr als die Hälfte, der Unterseite des Hauptabschnitts 19, insbesondere der Unterseite der Befestigungsvorrichtung 10. Vorzugsweise ist die x-Erstreckung und/oder y-Erstreckung des Ansaugbereichs 3 größer als die z-Erstreckung des Hauptabschnitts 19, insbesondere der Befestigungsvorrichtung 10. Vorzugsweise liegt das Verhältnis der x-Erstreckung des Ansaugbereichs 3 zur y-Erstreckung des Ansaugbereichs zwischen 1,5 zu 1 und 3,5 zu 1, zweckmäßigerweise zwischen 2 zu 1 und 3 zu 1. Vorzugsweise beträgt dieses Verhältnis 2 zu 1 oder 3 zu 1.

Der Ansaugbereich 3 ist in x-Richtung neben der Funktionseinheit 1 angeordnet. Exemplarisch sind der Ansaugbereich 3 und die Unterseite der Funktionseinheit 1 in die gleiche Richtung - exemplarisch die z-Richtung - ausgerichtet und liegen insbesondere in der gleichen x-y-Ebene.

Im Gehäuse 2, insbesondere im Hauptabschnitt 19, ist die elektrisch betriebene Unterdruckeinheit 4 angeordnet. Bei der elektrisch betriebenen Unterdruckeinheit 4 handelt es sich vorzugsweise um eine elektrische Vakuumpumpe. Ferner kann es sich bei der elektrisch betriebenen Unterdruckeinheit 4 um eine Kolbenpumpe, Lamellenpumpe und/oder eine Turbine handeln.

Im Gehäuse 2, insbesondere im Hauptabschnitt 19, ist zweckmäßigerweise ferner ein Energiespeicher 21 angeordnet. Bei dem Energiespeicher 21 handelt es sich beispielsweise um einen Akku. Der Energiespeicher 21 stellt zweckmäßigerweise die gesamte für den Betrieb der Befestigungsvorrichtung 10, insbesondere der Unterdruckeinheit 4, benötigte elektrische Energie bereit. Der Energiespeicher 21 umfasst zweckmäßigerweise mehrere im Gehäuse angeordnete Akku-Zellen. Alternativ oder zusätzlich kann die Befestigungsvorrichtung auch eine insbesondere außen am Gehäuse angeordnete Energiespeicher-Schnittstelle aufweisen, die zur Anbringung eines externen Energiespeichers, beispielsweise eines Wechsel-Akkus dient.

Geladen wird der Energiespeicher 21 zweckmäßigerweise durch ein externes Netzteil, welches über einen elektrischen Anschluss, beispielsweise eine Standard-Rundstecker-Schnittstelle, mit der Befestigungsvorrichtung 10 verbunden werden kann. Die Befestigungsvorrichtung 10 umfasst zweckmäßigerweise eine insbesondere von außerhalb des Gehäuses 2 sichtbare visuelle Anzeige, die den Ladezustand des Energiespeichers 21 anzeigt. Ferner kann die Befestigungsvorrichtung 10 einen akustischen Signalgeber umfassen, der auf Reaktion darauf, dass der Ladezustand des Energiespeichers 21 einen Schwellenwert unterschreitet, ein durch einen Benutzer wahrnehmbares akustisches Warnsignal ausgibt, zweckmäßigerweise bevor die Unterdruckeinheit 4 aufgrund eines zu geringen Ladezustands des Energiespeichers 21 deaktiviert wird.

Die Einheit aus Gehäuse 2, Unterdruckeinheit 4, Ansaugbereich 3 und Befestigungs-Schnittstelle 5 kann zweckmäßigerweise auch als Befestigungseinheit 20 bezeichnet werden.

Im Betrieb wird die als Führungseinrichtung ausgebildete Funktionseinheit 1 zunächst auf der Oberseite der Unterlage 8 positioniert. Dann wird die Befestigungsvorrichtung 10 mit ihrem Ansaugbereich 3 auf der Oberseite der Unterlage 8 aufgelegt. Bei der Auflage der Befestigungsvorrichtung 10 auf der Oberseite der Unterlage 8 wird zweckmäßigerweise gleichzeitig die Befestigung-Schnittstelle 5 auf der Oberseite der Funktionseinheit 1 aufgelegt, insbesondere mit dieser in Eingriff gebracht. Exemplarisch ist die Befestigung-Schnittstelle 5 in die gleiche Richtung - hier die z-Richtung - ausgerichtet wie der Ansaugbereich 3, so dass durch ein und dieselbe in z-Richtung erfolgende Auflagebewegung der Befestigungsvorrichtung 10 der Ansaugbereich 3 auf die Oberseite der Unterlage 8 und die Befestigung-Schnittstelle 5 gleichzeitig auf der Oberseite der Funktionseinheit 1 auflegbar ist. Die Befestigungsvorrichtung 10 ist vorzugsweise vor und/oder nach der Auflage auf der Unterlage 8 in y-Richtung frei positionierbar, insbesondere relativ zur Funktionseinheit 1. Insbesondere ist die Befestigungsvorrichtung 10 in y-Richtung an einer beliebigen y-Position innerhalb der y-Erstreckung der Funktionseinheit 1 positionierbar.

Nach der Auflage der Befestigungsvorrichtung 10 auf der Unterlage 8 und der Funktionseinheit 1 wird die elektrisch betriebene Unterdruckeinheit 4 aktiviert, beispielsweise durch eine Benutzerbetätigung. Im Ansaugbereich 3 wird nun ein Unterdruck bereitgestellt, insbesondere ein Druck, der geringer als der Atmosphärendruck ist. Durch die Bereitstellung dieses Unterdrucks wird die Befestigungsvorrichtung 10 mit ihrem Ansaugbereich 3 an die Oberseite der Unterlage 8 angesaugt, so dass die Befestigungsvorrichtung 10 relativ zur Unterlage 8 in sämtliche Raumrichtungen fixiert ist. Über den Eingriff der Funktionseinheit 1 mit der Befestigung-Schnittstelle 5 ist nunmehr auch die Funktionseinheit 1 relativ zur Unterlage 8 fixiert, insbesondere in z-Richtung und/oder x-Richtung und/oder y-Richtung.

Die Befestigung-Schnittstelle 5 umfasst optional einen nachstehend noch näher erläuterten Befestigungsmechanismus, der durch eine Benutzerbetätigung aktiviert werden kann, um die Fixierung der Funktionseinheit 1 relativ zur Befestigung-Schnittstelle 5 in zumindest einer Raumrichtung, insbesondere der y-Richtung, bereitzustellen und/oder zu verstärken.

Vorzugsweise ist die Funktionseinheit 1 in z-Richtung und/oder x-Richtung durch Formschluss an der Befestigungs-Schnittstelle 5 fixiert und/oder in y-Richtung durch Kraftschluss an der Befestigungs-Schnittstelle 5 fixiert.

Alternativ zu der vorstehend erläuterten Vorgehensweise, bei der zuerst die Unterdruckeinheit 4 aktiviert wird und erst danach der (optional vorhandene) Befestigungsmechanismus, kann auch zuerst der Befestigungsmechanismus aktiviert werden und erst dann die Unterdruckeinheit 4 aktiviert werden. Bei letzterer Vorgehensweise wird zuerst die Befestigungsvorrichtung 10 an der Funktionseinheit 1 befestigt, so dass zweckmäßigerweise die Befestigungsvorrichtung 10 und die Funktionseinheit 1 (vor der Aktivierung der Unterdruckeinheit 4) gemeinsam relativ zur Unterlage 8 bewegt werden können, insbesondere in eine oder mehrere horizontale Richtungen. Durch die Aktivierung der Unterdruckeinheit 4 wird dann die Befestigungsvorrichtung 10 an der Unterlage 8 befestigt.

Die Funktionseinheit 1 ist durch die Befestigung an der Befestigungsvorrichtung 10 relativ zur Unterlage 8 fixiert, insbesondere in sämtlichen Raumrichtungen. Das Werkzeug 9 wird nun auf die Funktionseinheit 1 aufgesetzt und entlang eines durch die Funktionseinheit 1 definierten Führungspfads bewegt, um die Unterlage 8, insbesondere ein Werkstück, mit dem Werkzeug 9 zu bearbeiten. Zweckmäßigerweise erfolgt dabei eine Bearbeitung der Oberseite der Unterlage 8, insbesondere in der gleichen x-y-Ebene, in der die Unterseite der Funktionseinheit 1 und/oder des Ansaugbereichs 3 liegen.

Zur Abnahme der Funktionseinheit 1 kann die Unterdruckeinheit 4 (insbesondere durch Benutzerbetätigung) deaktiviert werden, so dass der Ansaugbereich 3 belüftet wird. Soweit vorhanden, kann ferner der Befestigungsmechanismus gelöst werden (insbesondere durch Benutzerbetätigung). Die Befestigungsvorrichtung 10 kann dann von der Unterlage 8 und von der Funktionseinheit 1 abgenommen werden. Ferner kann die Funktionseinheit 1 von der Unterlage 8 abgenommen werden.

Mittels der Befestigungsvorrichtung 10 kann also insbesondere eine (durch Benutzerbetätigung) lösbare Verbindung zwischen der Befestigungsvorrichtung 10 und der Unterlage 8 und zwischen der Befestigungsvorrichtung 10 und der Funktionseinheit 1 bereitgestellt werden.

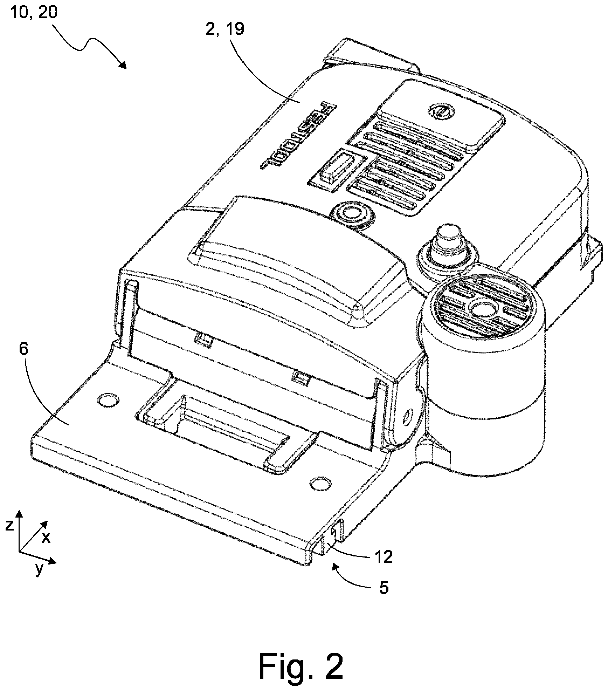

Die Figur 2 zeigt eine mögliche Ausgestaltung der Befestigungsvorrichtung 10. Die Befestigungs-Schnittstelle 5 für die Funktionseinheit 1 umfasst hier einen sich in y-Richtung erstreckenden Nutenstein 12. Der Nutenstein 12 weist exemplarisch ein L-Profil auf. Der Nutenstein 12 ist an der Unterseite des Befestigungsabschnitts 6 angebracht.

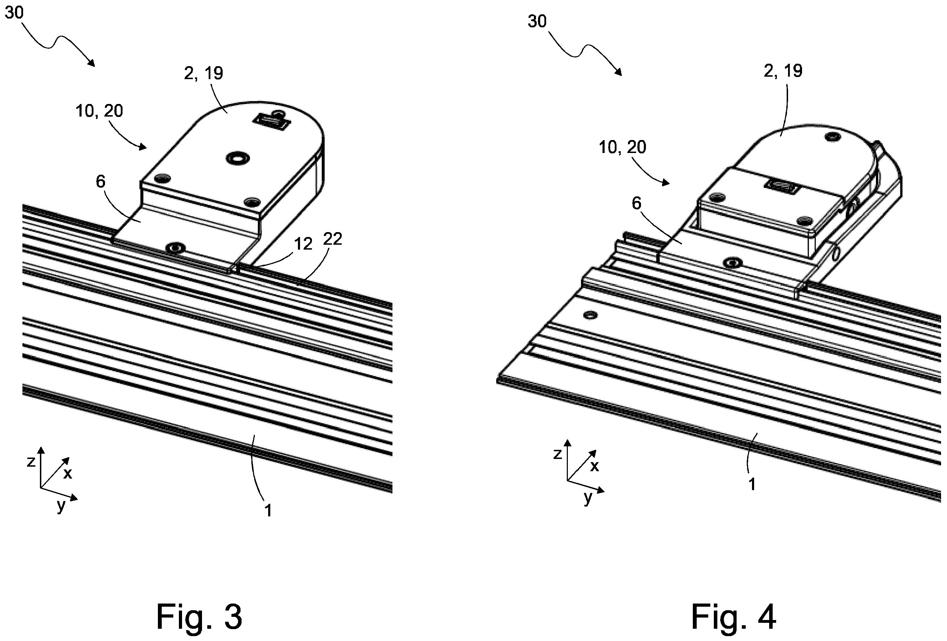

Die Figur 3 zeigt eine Anordnung 30 aus einer als Führungseinrichtung, insbesondere Führungsschiene, ausgebildeten Funktionseinheit 1 und einer Befestigungsvorrichtung 10.

Die Funktionseinheit 1 verfügt über eine Befestigungsnut 22, in die der Nutenstein 12 der Befestigungsvorrichtung 10 eingesetzt ist. Die Befestigungsnut 22 erstreckt sich exemplarisch in y-Richtung und ist vorzugsweise an der Oberseite der Funktionseinheit 1 angeordnet.

Der Befestigungsabschnitt 6 ist hier zweckmäßigerweise fest, insbesondere nicht-lösbar, mit dem Hauptabschnitt 19 verbunden. Insbesondere ist der Befestigungsabschnitt 6 einstückig mit dem Gehäuse 2 ausgeführt - also ein integraler Bestandteil des Gehäuses 2.

Die Figur 4 zeigt eine alternative Ausgestaltung der Befestigungsvorrichtung 10, bei der der Befestigungsabschnitt 6 abnehmbar an dem Hauptabschnitt 19 angebracht ist. Gemäß einer (in den Figuren nicht gezeigten Ausgestaltung) werden wenigstens zwei unterschiedliche Befestigungsabschnitte 6 bereitgestellt, die alternativ zueinander an dem Hauptabschnitt 19 anbringbar sind.

Exemplarisch verfügt der Befestigungsabschnitt 6 über eine rahmenförmige Grundgestalt in dessen Mitte eine Durchbrechung vorhanden ist, in die der Hauptabschnitt 19 einsetzbar ist.

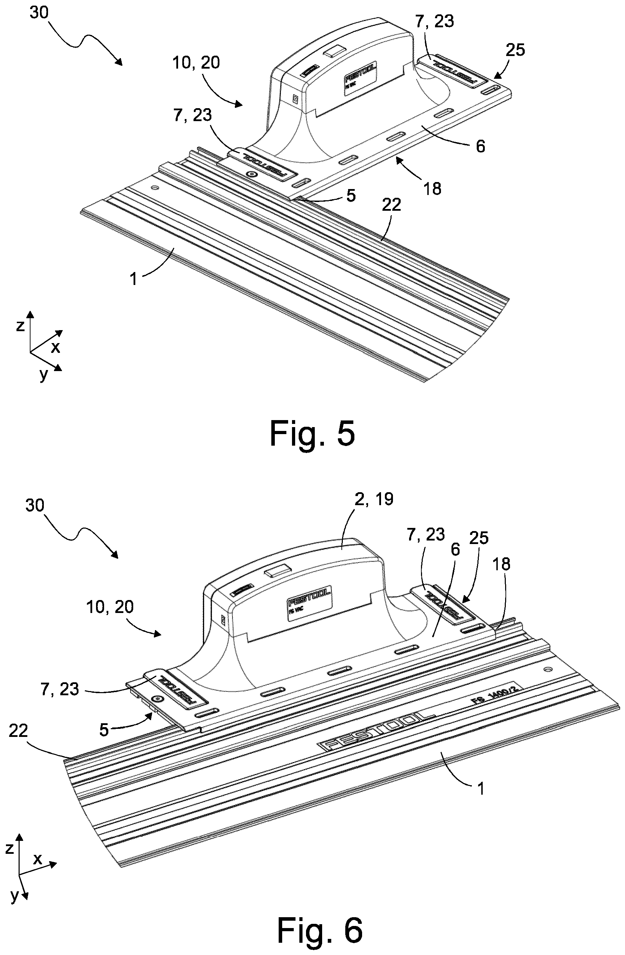

Die Figuren 5 und 6 zeigen eine Ausgestaltung der Befestigungsvorrichtung 10, bei der die Befestigungsvorrichtung 10 mehrere Befestigungs-Schnittstellen 5, 18, 25 umfasst.

Insbesondere umfasst die Befestigungsvorrichtung 10 dieser Ausgestaltung eine erste Befestigungs-Schnittstelle 5 und eine zweite Befestigungs-Schnittstelle 18. Optional umfasst die Befestigungsvorrichtung 10 ferner eine dritte Befestigung-Schnittstelle 25. Die beiden Befestigungs-Schnittstellen 5, 18, insbesondere sämtliche Befestigungs-Schnittstellen 5, 18, 25, sind an unterschiedlichen Seiten der Befestigungsvorrichtung 10 angeordnet. Exemplarisch ist die erste Befestigung-Schnittstelle 5 an der Vorderseite der Befestigungsvorrichtung 10 angeordnet, die zweite Befestigung-Schnittstelle 18 ist an einer Querseite der Befestigungsvorrichtung 10 angeordnet und/oder die dritte Befestigung-Schnittstelle 25 ist an der Rückseite der Befestigungsvorrichtung 10 angeordnet.

Die erste Befestigungs-Schnittstelle 5 und/oder die dritte Befestigungs-Schnittstelle 25 sind zweckmäßigerweise mit ihren Längsachsen in y-Richtung ausgerichtet. Die zweite Befestigungs-Schnittstelle 25 ist mit ihrer Längsachse in x-Richtung ausgerichtet.

Jede der Befestigungs-Schnittstellen 5, 18, 25 umfasst zweckmäßigerweise einen eigenen Nutenstein, der in Eingriff mit der Befestigungsnut 22 gebracht werden kann. Der Nutenstein der ersten Befestigung-Schnittstelle 5 ist orthogonal zum Nutenstein der zweiten Befestigung-Schnittstelle 18 ausgerichtet.

Die zweite Befestigungs-Schnittstelle 18, insbesondere deren Nutenstein, weist zweckmäßigerweise eine x-Erstreckung auf, die mindestens drei Mal so groß ist wie die y-Erstreckung der ersten Befestigungs-Schnittstelle 5 und/oder der dritten Befestigungs-Schnittstelle 25.

Exemplarisch dienen eine, mehrere oder sämtliche der Befestigung-Schnittstellen 5, 18, 25 zur alternativen Anbringung der Funktionseinheit 1, insbesondere einer Führungsschiene. Die Funktionseinheit 1 kann zweckmäßigerweise wahlweise an der ersten Befestigung-Schnittstelle 5, an der zweiten Befestigung-Schnittstelle 18 oder an der dritten Befestigung-Schnittstelle 25 angebracht werden. In der Figur 5 ist die Funktionseinheit 1 an der ersten Befestigung-Schnittstelle 5 angebracht. Die Funktionseinheit 1 ist hier mit ihrer Längsachse in y-Richtung ausgerichtet. In der Figur 6 ist die Funktionseinheit 1 (alternativ dazu) an der zweiten Befestigung-Schnittstelle 18 angebracht. Die Funktionseinheit 1 ist hier mit ihrer Längsachse in x-Richtung ausgerichtet.

Die Befestigungs-Schnittstellen 5, 18, 25 sind an dem Befestigungsabschnitt 6 angeordnet, der hier exemplarisch als plattenförmiger Abschnitt mit C-förmigem Grundriss ausgeführt ist. Der Befestigungs-Abschnitt 6 umgibt den Hauptabschnitt 19 an drei Seiten. Der Hauptabschnitt 19 erstreckt sich in z-Richtung über die Oberseite des Befestigungsabschnitts 6 hinaus. Der Hauptabschnitt 19 verfügt über eine quaderförmige Grundgestalt, die mit ihrer Längsachse parallel zur y-Richtung ausgerichtet ist. Die Übergänge zwischen den vertikalen Seiten des Hauptabschnitts 19 und der Oberseite des Befestigungsabschnitts 6 sind exemplarisch abgerundet ausgeführt.

Vorzugsweise wird eine (in den Figuren nicht gezeigte Anordnung) bereitgestellt, umfassend die Befestigungsvorrichtung 10 und zwei Funktionseinheiten 1, insbesondere zwei Führungsschienen, wobei die Befestigungsvorrichtung 10 über wenigstens zwei Befestigung-Schnittstellen 5, 18, 25 verfügt und jede Funktionseinheit 1 an einer anderen der Befestigung-Schnittstellen 5, 18, 25 angebracht ist.

Die Befestigungsvorrichtung 10 umfasst exemplarisch einen Befestigungsmechanismus 7, über den eine oder mehrere Befestigungs-Schnittstellen 5, 18, 25 an der Funktionseinheit 1 festgeklemmt werden können.

Der Befestigungsmechanismus 7 umfasst zweckmäßigerweise ein Bedienelement 23 sowie ein (in den Figuren nicht gezeigtes) Befestigungselement. Durch Betätigung des Bedienelement 23 wird das Befestigungselement in eine Befestigungsstellung versetzt, in der es gegen eine Befestigungsstruktur der Funktionseinheit 1 drückt, sodass die Funktionseinheit 1 an der Befestigungs-Schnittstelle der Befestigungsvorrichtung 10 festgeklemmt wird. Beispielsweise wird durch Betätigung des Bedienelements 23 ein als Bügel ausgeführtes Befestigungselement über eine Kurvenbahn gegen die Führungsschiene gespannt. Der Bügel wird dabei durchgebogen, wodurch ein gewisser Toleranzausgleich bereitgestellt werden kann. Ferner sorgt die Durchbiegung dafür, dass eine Vorspannkraft auf die Führungsschiene ausgeübt wird.

Exemplarisch ist das Bedienelement 23 als Hebel ausgeführt, der an der Oberseite des Befestigungsabschnitts 6 angeordnet ist. Das Bedienelement 23 ist um eine horizontale Achse verschwenkbar gelagert. Zweckmäßigerweise sind zwei Bedienelemente 23 vorhanden. Der Befestigungsmechanismus 7, insbesondere das Bedienelement, umfasst zweckmäßigerweise einen Kniehebel, einen Exzenter und/oder einen Drehhebel.

Gemäß einer möglichen Ausgestaltung sind für die erste Befestigungs-Schnittstelle 5 und die zweite Befestigungs-Schnittstelle 18 jeweils unterschiedliche Befestigungsmechanismen vorhanden. Exemplarisch umfasst der Befestigungsmechanismus der ersten Befestigungs-Schnittstelle 5 einen Nutenstein und/oder der Befestigungsmechanismus der zweiten Befestigungs-Schnittstelle umfasst einen Kniehebel.

Gemäß einer weitere möglichen Ausgestaltung ist die dritte Befestigungs-Schnittstelle 25 nicht vorhanden.

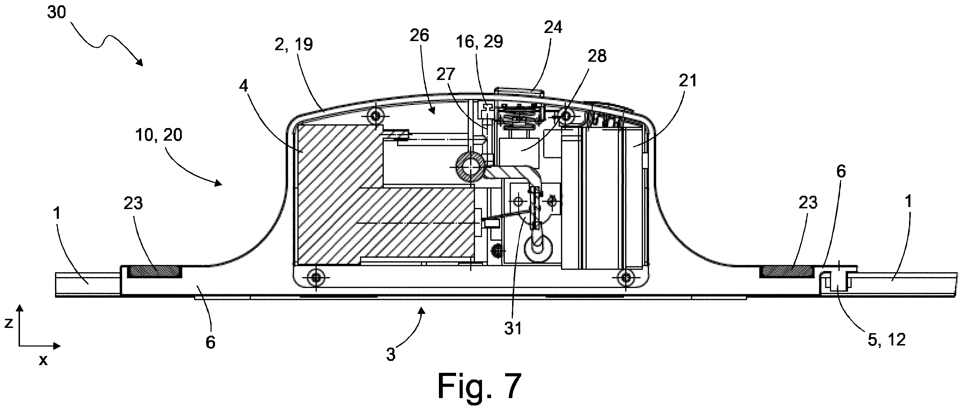

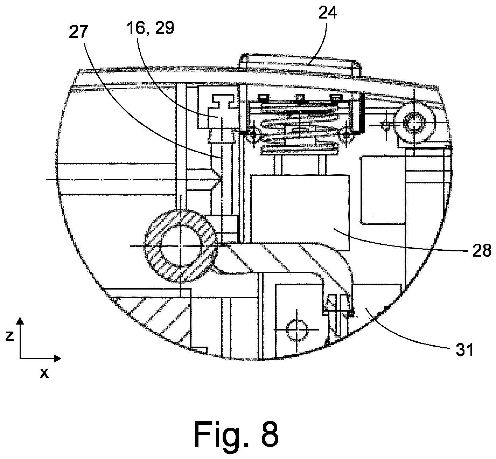

Die Figur 7 zeigt einen x-z-Schnitt durch die Befestigungsvorrichtung 10, insbesondere durch den Hauptabschnitt 19. In der Figur 8 ist ein vergrößerter Ausschnitt des Schnitts auf der Figur 7 gezeigt.

Im Inneren des Gehäuses 2 befindet sich ein Gehäuse-Innenraum 26, der exemplarisch quaderförmig ausgeführt ist und in dem mehrere Komponenten der Befestigungsvorrichtung 10 angeordnet sind, insbesondere die elektrisch betriebene Unterdruckeinheit 4 und der Energiespeicher 21.

Die Befestigungsvorrichtung 10 umfasst ein Bedienelement 24, das exemplarisch an der Oberseite des Hauptabschnitts 19 angeordnet ist. Das Bedienelement 24 ist zweckmäßigerweise als Taste ausgeführt und dient insbesondere dazu, die elektrisch betriebene Unterdruckeinheit 4 zu deaktivieren sodass diese nicht mehr den Unterdruck im Ansaugbereich 3 bereitstellt. Alternativ oder zusätzlich dient das Bedienelement 24 dazu, ein Belüftungsventil 16 zu öffnen, über welches der Ansaugbereich 3 belüftet wird. Zweckmäßigerweise kann mit ein und derselben Benutzerbetätigung des Bedienelement 24, beispielsweise einem Druck nach unten auf das Bedienelement 24, gleichzeitig die Deaktivierung, insbesondere eine Abschaltung, der elektrisch betriebenen Unterdruckeinheit 4 sowie das Öffnen des Belüftungsventils 16 bewirkt werden. Die Deaktivierung der Unterdruckeinheit 4 erfolgt dabei zweckmäßigerweise elektrisch und die Öffnung des Belüftungsventils 16 zweckmäßigerweise rein mechanisch. Insbesondere ist das Bedienelement 24 (rein) mechanisch an das Belüftungsventil 16 gekoppelt, sodass bei Betätigung des Bedienelement 24 eine Öffnung des Belüftungsventils 16 durch die (rein) mechanische Kopplung erfolgt.

Exemplarisch umfasst das Belüftungsventil 16 ein Ventilglied 29, exemplarisch ein Dichtelement, das eine Öffnung einer fluidischen Leitung 27 verschließt, die zu dem Ansaugbereich 3 führt. Durch eine Betätigung des Bedienelements 24 kann bewirkt werden, dass das Ventilglied 29 die Öffnung der fluidischen Leitung 27 freigibt, wodurch der Ansaugbereich 3 über die fluidische Leitung 27 belüftet werden kann.

Das Bedienelement 24 ist ferner mit der elektrischen Schaltvorrichtung 28, beispielsweise einer Steuereinheit, insbesondere einem Mikrocontroller, gekoppelt. Über die elektrische Schalteinrichtung 28 wird bei Betätigung des Bedienelements 24 die Unterdruckeinheit 4 deaktiviert, insbesondere ausgeschaltet.

Die Unterdruckeinheit 4 ist exemplarisch als Vakuumpumpe ausgeführt und erzeugt einen Unterdruck in dem Ansaugbereich 3, der sich zwischen der Befestigungsvorrichtung 10 und der Unterlage 8 befindet. Die Unterdruckeinheit 4 ist über eine fluidische Leitung, beispielsweise einem Schlauch, mit dem Ansaugbereich 3 fluidisch verbunden. Die fluidische Leitung 27 für das Belüftungsventil 16 ist ebenfalls in dem Gehäuse 2 angeordnet. Mittels des Belüftungsventils 16 kann dafür gesorgt werden, dass sich die Befestigungsvorrichtung 10 unmittelbar nach dem Ausschalten der Vakuumpumpe von der Unterlage 8 ablösen lässt.

Gemäß einer möglichen Ausgestaltung ist die elektrische betriebene Unterdruckeinheit 4 ausgebildet, zwei Unterdruck-Kreisläufe bereitzustellen. Auf diese Weise können beispielsweise zwei voneinander unabhängige Unterdrücke bereitgestellt werden.

Die Befestigungsvorrichtung 10 ist zweckmäßigerweise ferner ausgebildet, eine Regelung des von der Unterdruckeinheit 4 bereitgestellten Unterdrucks durchzuführen. Insbesondere ist die Befestigungsvorrichtung 10 ausgebildet, den Unterdruck auf einen vorgegebenen Zieldruck zu regeln. Exemplarisch umfasst die Befestigungsvorrichtung 10 einen Drucksensor 31, über den ein Ist-Druckwert des Unterdrucks erfasst wird und vorzugsweise bei der Regelung berücksichtigt wird.

Vorzugsweise ist die Befestigungsvorrichtung 10 ausgebildet, einen Fehlerzustand zu erfassen und basierend auf der Erfassung des Fehlerzustands ein Fehlersignal, insbesondere ein durch einen Benutzer wahrnehmbares Fehlersignal, bereitzustellen. Beispielsweise ist die Befestigungsvorrichtung 10 ausgebildet, zu erfassen, dass der im Ansaugbereich 3 bereitgestellte Unterdruck einen vorbestimmten Schwellenwert überschreitet und auf Basis dieser Erfassung das Fehlersignal, beispielsweise als akustisches Warnsignal, bereitzustellen.

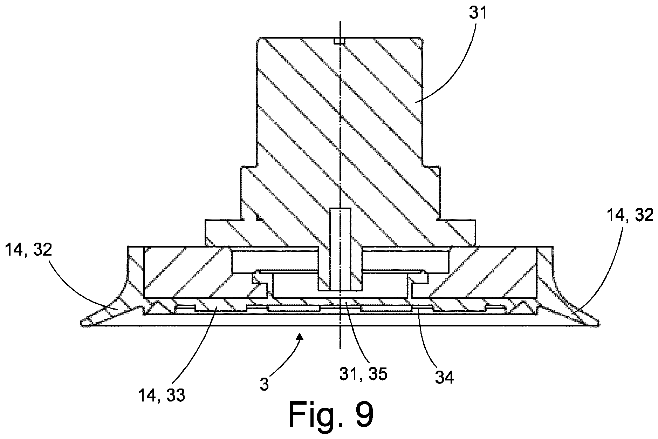

Die Figur 9 zeigt einen unteren Teilbereich der Befestigungsvorrichtung 10, umfassend eine Dichtungs- und/oder Auflageanordnung 14. Der Teilbereich umfasst ferner exemplarisch den Drucksensor 31.

Die Dichtung- und/oder Auflageanordnung 14 umfasst exemplarisch einen Dichtungsabschnitt 32, der an der Unterseite der Befestigungsvorrichtung 10 angeordnet ist, und den Ansaugbereich 3 umläuft, sodass der Ansaugbereich 3 in einem Zustand, in dem die Befestigungsvorrichtung auf der Unterlage 8 aufgelegt ist, gegenüber der Umgebung, insbesondere gegenüber der Atmosphäre, abgedichtet ist.

Die Dichtung- und/oder Auflageanordnung 14 umfasst ferner exemplarisch einen Auflageabschnitt 33, der innerhalb des Ansaugbereichs 3 die Unterseite der Befestigungsvorrichtung 10 bildet. Der Dichtungsabschnitt 32 umläuft zweckmäßigerweise den Auflageabschnitt 33. In einem Zustand, in dem die Befestigungsvorrichtung 10 auf der Unterlage 8 aufgelegt ist und die Unterdruckeinheit 4 aktiviert ist, liegt die Befestigungsvorrichtung 10 zweckmäßigerweise mit dem Dichtungsabschnitt 32 und dem Auflageabschnitt 33 auf der Unterlage 8 auf. In einem Zustand, in dem die Befestigungsvorrichtung 10 auf der Unterlage 8 aufgelegt ist und die Unterdruckeinheit 4 deaktiviert ist, liegt die Befestigungsvorrichtung 10 zweckmäßigerweise mit dem Dichtungsabschnitt 32 (und nicht mit dem Auflageabschnitt 33) auf der Unterlage 8 auf.

Die Dichtungs- und/oder Auflageanordnung 14 ist exemplarisch napfförmig ausgeführt, wobei der Dichtungsabschnitt 32 den Randbereich der Napfform bildet und der Auflageabschnitt 33 den Bodenbereich der Napfform bildet.

Die Befestigungsvorrichtung 10 umfasst eine Ansaugseite, auf der der Ansaugbereich 3 bereitgestellt wird. Exemplarisch ist die Ansaugseite die Unterseite des Auflageabschnitts 33. Die Ansaugseite definiert eine erste Auflage-Ebene - nämlich diejenige Auflage-Ebene, mit der die Befestigungsvorrichtung 10 auf der Unterlage 8 aufliegt, wenn die Unterdruckeinheit 4 aktiviert ist.

Die Dichtungs- und/oder Auflage-Anordnung 14 definiert eine zweite Auflage-Ebene zur Auflage auf der Unterlage 8. Die zweite Auflage-Ebene wird exemplarisch durch den Dichtungsabschnitt 32 definiert. Die zweiten Auflage-Ebene ist diejenige Auflage-Ebene, mit der die Befestigungsvorrichtung 10 auf der Unterlage 8 aufliegt, wenn die Unterdruckeinheit 4 deaktiviert ist.

Die zweite Auflage-Ebene ist gegenüber der ersten Auflage-Ebene - also gegenüber der Ansaugseite - angewinkelt. Insbesondere ist die zweite Auflageebene gegenüber der ersten Auflageebene um eine horizontale Achse - insbesondere um die y-Achse - verschwenkt.

Solange kein Unterdruck im Ansaugbereich 3 bereitgestellt wird, liegt die Befestigungsvorrichtung 10 mit dem Dichtungsabschnitt 32 (und nicht mit dem Auflageabschnitt 33), also insbesondere der zweiten Auflage-Ebene, auf der Unterlage 8 auf. Die durch den Auflageabschnitt 33 definierte erste Auflage-Ebene ist gegenüber der Unterlage 8 um eine horizontale Schwenkachse verschwenkt ausgerichtet. Durch Bereitstellung eines Unterdrucks im Ansaugbereich 3 saugt sich die Befestigungsvorrichtung 10 mit dem Auflageabschnitt 33 an die Unterlage 8. Aufgrund des Winkels zwischen den beiden Auflage-Ebenen findet dabei eine Schwenkbewegung der Befestigungsvorrichtung 10 relativ zur Unterlage 8 statt.

Gemäß einer exemplarischen Ausgestaltung umfasst die Dichtungs- und/oder Auflage-Anordnung 14, insbesondere der Auflageabschnitt 33 eine Drucksensormembran 35 des Drucksensors 31. Der Drucksensor 31 erfasst beispielsweise eine Auslenkung der Drucksensormembran und stellt basierend darauf ein Drucksignal bezüglich des im Ansaugbereich 3 herrschenden Drucks bereit. Die Drucksensormembran 35 ist insbesondere ein zentraler Abschnitt des Auflageabschnitts 33. Zweckmäßigerweise ist die Drucksensormembran 35 in den Auflageabschnitt 33 integriert und insbesondere einstückig mit diesem ausgeführt.

In dem Auflageabschnitt 33 ist exemplarisch eine Mehrzahl an Vertiefungen 34 vorgesehen, die bei der Auflage des Auflageabschnitts 33 auf der Unterlage 8 die Unterlage 8 nicht berühren. Zweckmäßigerweise beträgt der Flächenanteil der Flächenbereiche des Auflageabschnitts 33, die die Unterlage 8 berühren, wenigstens 50% der Gesamtfläche der Unterseite des Auflageabschnitts 33.

Gemäß der gezeigten Ausgestaltung ist die Dichtungs- und/oder Auflage-Anordnung 14 einstückig ausgeführt. Insbesondere sind der Dichtungsabschnitt 32 und der Auflageabschnitt 33 stoffschlüssig miteinander verbunden. Die Dichtungs- und/oder Auflage-Anordnung 14 ist beispielsweise unten an das Gehäuse 2 angespritzt.

Alternativ oder zusätzlich dazu kann die Dichtungs- und/oder Auflage-Anordnung 14 und/oder ein Einzelteil und/oder ein Abschnitt davon, beispielsweise der Dichtungsabschnitt 32 und/oder der Auflageabschnitt 33, wechselbar, insbesondere einzeln wechselbar, ausgeführt sein.

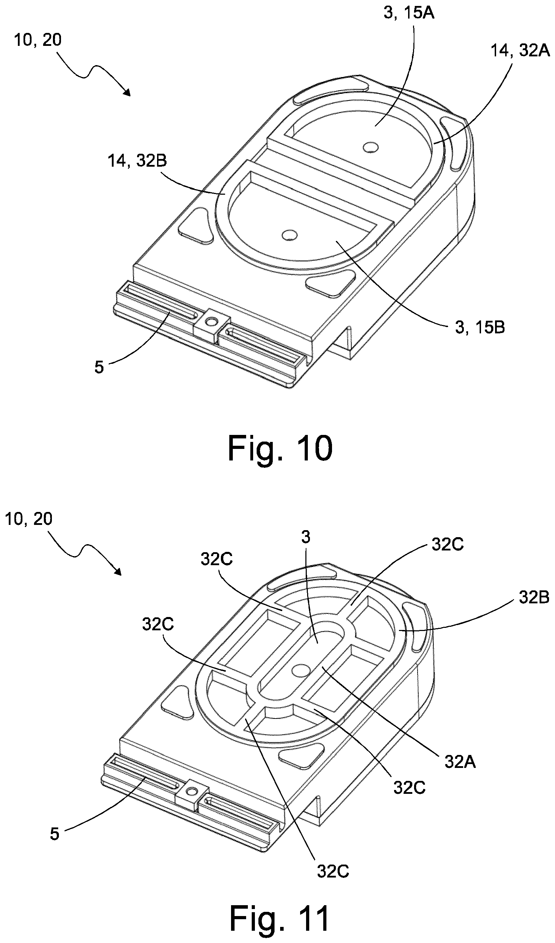

Die Figur 10 zeigt die Befestigungsvorrichtung 10 von unten. Exemplarisch umfasst der Ansaugbereich 3 hier zwei separate Ansaugabschnitte 15A, 15B. Jeder Ansaugabschnitt 15A, 15B ist zweckmäßigerweise einem jeweiligen Unterdruck-Kreislauf zugehörig. Jeder Ansaugabschnitt 15A, 15B wird exemplarisch durch einen eigenen Dichtungsabschnitt 32A, 32B gegenüber der Umgebung abgedichtet (in einem Zustand, in dem die Befestigungsvorrichtung 10 auf der Unterlage 8 aufliegt). Die beiden Führungsabschnitte 32A, 32B haben exemplarisch jeweils einen halbkreisförmigen Verlauf.

Die Figur 11 zeigt eine alternative Ausgestaltung der Unterseite der Befestigungsvorrichtung 10. Die Befestigungsvorrichtung umfasst hier einen ersten Dichtungsabschnitt 32A, der den Ansaugbereich 3 umgibt, und zusätzlich dazu einen zweiten Dichtungsabschnitt 32B, der den ersten Dichtungsabschnitt 32A umgibt. Beide Dichtungsabschnitte 32A, 32B haben exemplarisch einen elliptischen Verlauf. Zweckmäßigerweise sind die beiden Dichtungsabschnitte 32A, 32B über eine Mehrzahl an stegförmigen dritten Dichtungsabschnitten 32C miteinander verbunden. Die aus den ersten, zweiten und/oder dritten Dichtungsabschnitten 32A, 32B, 32C gebildete Dichtungsstruktur kann auch als Segmentdichtung bezeichnet werden.

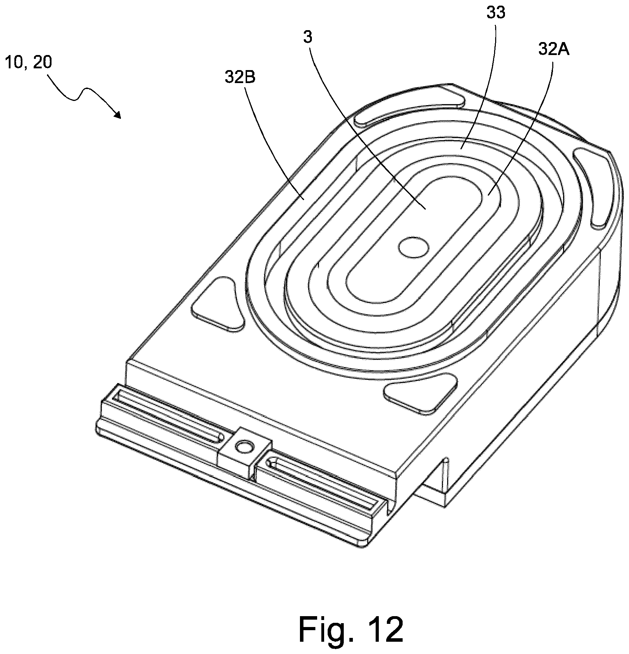

Die Figur 12 zeigt eine Variation der Ausgestaltung der Figur 11. Die Befestigungsvorrichtung umfasst hier ebenfalls einen ersten Dichtungsabschnitt 32A, der den Ansaugbereich 3 umgibt, und zusätzlich dazu einen zweiten Dichtungsabschnitt 32B, der den ersten Dichtungsabschnitt 32A umgibt. Zwischen den beiden Dichtungsabschnitten 32A, 32B ist hier ein Auflageabschnitt 33 vorgesehen. Der Auflageabschnitt 33 umgibt den ersten Dichtungsabschnitt 32A. Der zweite Dichtungsabschnitt 32B umgibt den Auflageabschnitt 33. Beide Dichtungsabschnitte 32A, 32B und/oder der Auflageabschnitt 33 haben exemplarisch einen elliptischen Verlauf.

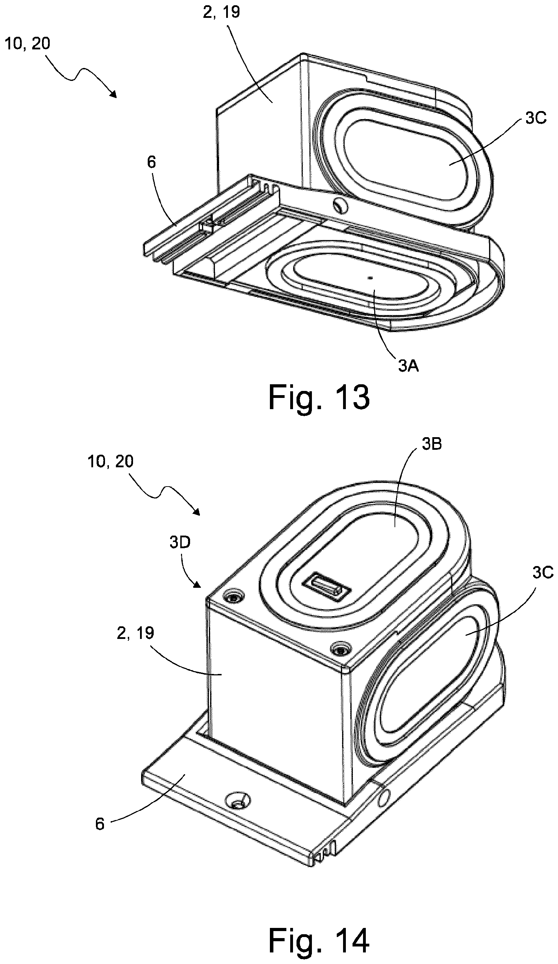

Die Figuren 13 und 14 zeigen eine Ausgestaltung der Befestigungsvorrichtung 10, bei der die Befestigungsvorrichtung 10 über eine Mehrzahl von Ansaugbereichen 3A, 3B, 3C, 3D verfügt, die zweckmäßigerweise an verschiedenen Seiten der Befestigungsvorrichtung 10, insbesondere an verschiedenen Seiten des Hauptabschnitts 19, angeordnet sind. Exemplarisch ist ein erster Ansaugbereich 3A an der Unterseite der Befestigungsvorrichtung 10 angeordnet, ein zweiter Ansaugbereich 3B an der Oberseite der Befestigungsvorrichtung 10, ein dritter Ansaugbereich 3C an einer ersten Querseite der Befestigungsvorrichtung 10 und ein vierter Ansaugbereich 3D an einer zweiten Querseite der Befestigungsvorrichtung 10. Exemplarisch wird jeder Ansaugbereich 3A, 3B, 3C, 3D von einem jeweiligen Dichtungsabschnitt umgeben.

Die Befestigungsvorrichtung 10 ist ausgebildet, jeden Ansaugbereich 3A, 3B, 3C, 3D, insbesondere einzeln, mit einem Unterdruck zu beaufschlagen, insbesondere mittels der Unterdruckeinheit 4.

Exemplarisch ist der Befestigungsabschnitt 6 abnehmbar ausgeführt und kann zweckmäßigerweise an jeder Seite des Hauptabschnitts 19 angebracht werden, an der sich ein Ansaugbereich 3A, 3B, 3C, 3D befindet.

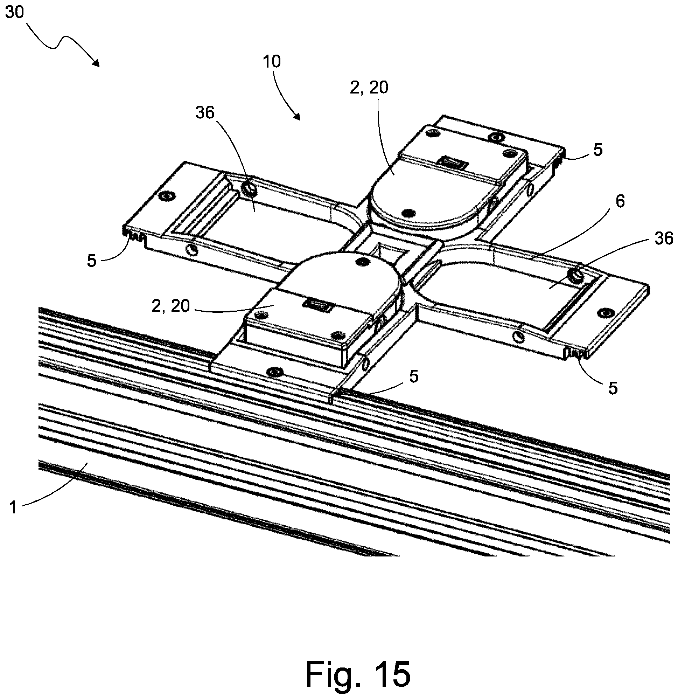

Die Figur 15 zeigt eine Befestigungsvorrichtung 10, die eine Mehrzahl von Befestigungseinheiten 20 umfasst. Zweckmäßigerweise verfügt jede Befestigungseinheit 20 über ein eigenes Gehäuse 2, einen eigenen Ansaugbereich 3 und eine eigene Unterdruckeinheit 4. Insbesondere ist jede Befestigungseinheit 20 wie eine vorstehend erläuterte Befestigungsvorrichtung ohne eigenen Befestigungsabschnitt 6 - also insbesondere wie ein Hauptabschnitt 19 - ausgeführt.

Die Befestigungseinheiten 20 sind mechanisch miteinander gekoppelt. Exemplarisch sind die Befestigungseinheiten 20 über einen gemeinsamen Befestigungsabschnitt 6 mechanisch miteinander gekoppelt. Der Befestigungsabschnitt 6 ist exemplarisch kreuzförmig ausgeführt und verfügt über vier Befestigungseinheit-Aufnahmebereiche, von denen exemplarisch zwei belegt sind. Der Befestigungsabschnitt 6 umfasst exemplarisch vier Befestigungs-Schnittstellen 5. Jede Befestigungs-Schnittstelle 5 ist an einem jeweiligen Kreuzende des Befestigungsabschnitts 6 angeordnet.

Gemäß einer weiteren Ausgestaltung umfasst eine der vorstehend erläuterten Befestigungsvorrichtungen 10 eine Kommunikationseinheit, beispielsweise eine Drahtloskommunikationseinheit.

Zweckmäßigerweise wird ein System aus zwei oder mehr der vorstehend erläuterten Befestigungsvorrichtungen 10 bereitgestellt. Die Befestigungsvorrichtungen 10 sind ausgebildet, über ihre Kommunikationseinheiten miteinander zu kommunizieren. Insbesondere sind die Befestigungsvorrichtungen 10 ausgebildet, die Bereitstellung des Unterdrucks über die Kommunikation über die Kommunikationseinheiten zu koordinieren. Exemplarisch ist eine erste Befestigungsvorrichtung 10 ausgebildet, bei Aktivierung der Unterdruckeinheit 4 der ersten Befestigungsvorrichtung 10 ein Kommunikationssignal an eine zweite Befestigungsvorrichtung 10 zu senden, das bewirkt, dass die Unterdruckeinheit 4 der zweiten Befestigungsvorrichtung 10 ebenfalls aktiviert wird. Exemplarisch ist die erste Befestigungsvorrichtung 10 ferner ausgebildet, bei Deaktivierung der Unterdruckeinheit 4 der ersten Befestigungsvorrichtung 10 ein Kommunikationssignal an die zweite Befestigungsvorrichtung 10 zu senden, das bewirkt, dass die Unterdruckeinheit 4 der zweiten Befestigungsvorrichtung 10 ebenfalls deaktiviert wird. Bei den beiden Befestigungsvorrichtungen 10 handelt es sich zweckmäßigerweise um eigenständige, separate Geräte, die jeweils ein eigenes Gehäuse 2 aufweisen.

Gemäß einer weiteren möglichen Ausgestaltung umfasst die Befestigungsvorrichtung 10 eine zusätzliche Befestigungs-Schnittstelle zur Befestigung einer Lampe. Exemplarisch wird eine Anordnung bereitgestellt aus einer Befestigungsvorrichtung 10 und einer Lampe, wobei die Lampe an der zusätzlichen Befestigungs-Schnittstelle befestigt ist. Die Anordnung umfasst vorzugsweise ferner eine Funktionseinheit 1, insbesondere eine Führungsschiene, die an der Befestigungs-Schnittstelle 5 der Befestigungsvorrichtung 10 befestigt ist.

Der Schutzumfang der vorliegenden Erfindung wird durch die angefügten Ansprüche definiert.

## Patentansprüche

1. Anordnung (30), umfassend eine Befestigungsvorrichtung (10) für eine Funktionseinheit (1), wobei die Befestigungsvorrichtung (10) umfasst:
- ein Gehäuse (2),
- einen außen am Gehäuse (2) angeordneten Ansaugbereich (3) mit dem sich die Befestigungsvorrichtung (10) lösbar an einer Unterlage (8) befestigen lässt,
- eine Befestigungs-Schnittstelle (5) zur Befestigung der Funktionseinheit (1), und
- eine im Gehäuse (2) angeordnete elektrisch betriebene Unterdruckeinheit (4), die ausgebildet ist, im Ansaugbereich (3) einen Unterdruck bereitzustellen,
wobei
die Anordnung (30) die Funktionseinheit (1) umfasst, **dadurch gekennzeichnet, dass** die Funktionseinheit (1) eine Führungseinrichtung, und zwar eine Führungsschiene, eine Oberfräseführung, eine Frässchablone und/oder eine Rollführungsschiene umfasst.

2. Anordnung (30) nach Anspruch 1, wobei die Befestigungs-Schnittstelle (5) in die gleiche Richtung ausgerichtet ist wie der Ansaugbereich (3).

3. Anordnung (30) nach einem der voranstehenden Ansprüche, wobei die Befestigungs-Schnittstelle (5) ausgebildet ist, in einem Zustand, in dem die Befestigungsvorrichtung (10) an der Unterlage (8) befestigt ist, die Funktionseinheit (1) in einer an der Unterlage (8) angelegten Stellung zu halten, insbesondere zu klemmen.

4. Anordnung (30) nach einem der voranstehenden Ansprüche, ferner umfassend einen insbesondere im Gehäuse (2) angeordneten Energiespeicher (21) und/oder eine insbesondere am Gehäuse (2) angeordnete Energiespeicher-Schnittstelle zur Anbringung eines Energiespeichers.

5. Anordnung (30) nach einem der voranstehenden Ansprüche, wobei die Befestigungsschnittstelle (5) einen Befestigungsmechanismus (7), einen Nutenstein (12), einen Kniehebel, einen Exzenter und/oder einen Drehhebel umfasst.

6. Anordnung (30) nach einem der voranstehenden Ansprüche, wobei die Befestigungsvorrichtung (10) ferner eine Dichtungs- und/oder Auflage-Anordnung (14) umfasst.

7. Anordnung (30) nach Anspruch 6, wobei mindestens ein Einzelteil oder Abschnitt der Dichtungs- und/oder Auflage-Anordnung (14) wechselbar ausgebildet ist.

8. Anordnung (30) nach einem der Ansprüche 6 bis 7, ferner umfassend eine Ansaugseite, auf der der Ansaugbereich (3) bereitgestellt wird, wobei die Dichtungs- und/oder Auflage-Anordnung (14) eine Auflage-Ebene zur Auflage auf der Unterlage (8) definiert.

9. Anordnung (30) nach Anspruch 8, wobei die Auflage-Ebene gegenüber der Ansaugseite angewinkelt ist.

10. Anordnung (30) nach einem der Ansprüche 6 bis 9, wobei die Dichtungs- und/oder Auflage-Anordnung (14) eine Drucksensormembran umfasst.

11. Anordnung (30) nach einem der voranstehenden Ansprüche, wobei die elektrische betriebene Unterdruckeinheit (4) ausgebildet ist, zwei Unterdruck-Kreisläufe bereitzustellen.

12. Anordnung (30) nach Anspruch 11, wobei der Ansaugbereich (3) wenigstens zwei separate Ansaugabschnitte (15A, 15B) umfasst, wobei jeder Ansaugabschnitt (15A, 15B) einem jeweiligen Unterdruck-Kreislauf zugehörig ist.

13. Anordnung (30) nach einem der voranstehenden Ansprüche, wobei die Befestigungsvorrichtung (10) ein Belüftungsventil (16) zur Belüftung des Ansaugbereichs (3) umfasst, wobei das Belüftungsventil (16) mit einem Bedienelement (24) gekoppelt ist.

14. Anordnung (30) nach einem der voranstehenden Ansprüche, wobei die Befestigungsvorrichtung (10) ausgebildet ist, eine Regelung des Unterdrucks durchzuführen.

15. Anordnung (30) nach einem der voranstehenden Ansprüche, wobei die Befestigungsvorrichtung (10) ausgebildet ist, einen Fehlerzustand zu erfassen und basierend auf der Erfassung des Fehlerzustands ein Fehlersignal, insbesondere ein durch einen Benutzer wahrnehmbares Fehlersignal, bereitzustellen.

16. Anordnung (30) nach einem der voranstehenden Ansprüche, wobei die Befestigungs-Schnittstelle (5) eine erste Befestigungs-Schnittstelle ist und die Befestigungsvorrichtung ferner eine zweite Befestigungs-Schnittstelle (18) umfasst.

17. Anordnung (30) nach Anspruch 16, wobei die beiden Befestigungsschnittstellen (5, 18) an unterschiedlichen Seiten der Befestigungsvorrichtung (10) angeordnet sind.

18. Anordnung nach einem der voranstehenden Ansprüche, wobei die Befestigungsvorrichtung (10) über eine Mehrzahl von Ansaugbereichen (3, 3A, 3B, 3C, 3D) verfügt, die zweckmäßigerweise an verschiedenen Seiten der Befestigungsvorrichtung angeordnet sind.

19. Anordnung (30) nach Anspruch 18, wobei die Befestigungsvorrichtung (10) über eine Mehrzahl von aneinander mechanisch gekoppelten Befestigungseinheiten (20) verfügt, wobei jede Befestigungseinheit (20) einen der Ansaugbereiche (3, 3A, 3B) bereitstellt und zweckmäßigerweise jede Befestigungseinheit (20) über ein eigenes Gehäuse (2, 2A, 2B) und/oder eine eigene elektrisch betriebene Unterdruckeinheit verfügt.

20. Anordnung (30) nach einem der voranstehenden Ansprüche, wobei die Befestigungsvorrichtung (10) eine Kommunikationseinheit umfasst.

21. Befestigungsvorrichtung, umfassend:
- ein Gehäuse,
- einen außen am Gehäuse angeordneten Ansaugbereich mit dem sich die Befestigungsvorrichtung lösbar an einer Unterlage befestigen lässt, und
- eine im Gehäuse angeordnete elektrisch betriebene Unterdruckeinheit, die ausgebildet ist, im Ansaugbereich einen Unterdruck bereitzustellen,
**dadurch gekennzeichnet, dass**
die Befestigungsvorrichtung eine Funktionseinheit umfasst, die integraler Teil der Befestigungsvorrichtung ist, und die Funktionseinheit eine Führungseinrichtung, und zwar eine Führungsschiene, eine Oberfräseführung, eine Frässchablone und/oder eine Rollführungsschiene umfasst.

22. Verfahren zum Betrieb einer Anordnung (30) nach einem der Ansprüche 1 bis 20, umfassend die Schritte:
- Positionieren der Führungseinrichtung auf einer Oberseite einer Unterlage (8),
- Auflegen der Befestigungsvorrichtung (10) mit ihrem Ansaugbereich (3) auf der Oberseite der Unterlage (8), wobei gleichzeitig die Befestigungs-Schnittstelle (5) auf der Oberseite der Führungseinrichtung aufgelegt wird, insbesondere mit dieser in Eingriff gebracht wird,
- nach der Auflage der Befestigungsvorrichtung (10) auf der Unterlage (8) und der Führungseinrichtung, Aktivieren der elektrisch betriebenen Unterdruckeinheit (4).

## Claims

1. Arrangement (30), comprising a fastening device (10) for a function unit (1), wherein the fastening device (10) comprises:
- a housing (2),
- a suction region (3) which is arranged on the housing (2) at the outside and with which the fastening device (10) can be releasably fastened to an underlay (8),
- a fastening interface (5) for fastening the function unit (1), and
- an electrically operated vacuum unit (4) which is arranged in the housing (2) and which is designed to provide a vacuum in the suction region (3), wherein
the arrangement (30) comprises the function unit (1),
**characterized in that**
the function unit (1) comprises a guide device, namely a guide rail, a router guide, a milling template and/or a roll guide rail.

2. Arrangement (30) according to claim 1, wherein the fastening interface (5) is aligned in the same direction as the suction region (3).

3. Arrangement (30) according to one of the preceding claims, wherein the fastening interface (5) is designed to hold, in particular to clamp, the function unit (1) in a position in which it is laid on the underlay (8), in a state in which the fastening device (10) is fastened to the underlay (8).

4. Arrangement (30) according to one of the preceding claims, further comprising an energy store (21) which in particular is arranged in the housing (2) and/or an energy store interface which in particular is arranged on the housing (2), for attaching an energy store.

5. Arrangement (30) according to one of the preceding claims, wherein the fastening interface (5) comprises a fastening mechanism (7), a slot nut (12), a toggle lever, an eccentric and/or a rotation lever.

6. Arrangement (30) according to one of the preceding claims, wherein the fastening device (10) further comprises a sealing and/or lay-on arrangement (14).

7. Arrangement (30) according to claim 6, wherein at least one individual part or section of the sealing and/or lay-on arrangement (14) is designed in an exchangeable manner.

8. Arrangement (30) according to one of the claims 6 to 7, further comprising a suction side, on which the suction region (3) is provided, wherein the sealing and/or lay-on arrangement (14) defines a lay-on plane for the laying on the underlay (8).

9. Arrangement (30) according to claim 8, wherein the lay-on plane is angled with respect to the suction side.

10. Arrangement (30) according to one of the claims 6 to 9, wherein the sealing and/or lay-on arrangement (14) comprises a pressure sensor membrane.

11. Arrangement (30) according to one of the preceding claims, wherein the electrically operated vacuum unit (4) is designed to provide two vacuum circuits.

12. Arrangement (30) according to claim 11, wherein the suction region (3) comprises at least two separate suction sections (15A, 15B), wherein each suction section (15A, 15B) belongs to a respective vacuum circuit.

13. Arrangement (30) according to one of the preceding claims, wherein the fastening device (10) comprises a venting valve (16) for venting the suction region (3), wherein the venting valve (16) is coupled to an operating element (24).

14. Arrangement (30) according to one of the preceding claims, wherein the fastening device (10) is designed to carry out a closed-loop control of the vacuum.

15. Arrangement (30) according to one of the preceding claims, wherein the fastening device (10) is designed to detect an error state and to provide an error signal, in particular an error signal which can be perceived by a user, on the basis of the detection of the error state.

16. Arrangement (30) according to one of the preceding claims, wherein the fastening interface (5) is a first fastening interface and the fastening device further comprises a second fastening interface (18).

17. Arrangement (30) according to claim 16, wherein the two fastening interfaces (5, 18) are arranged at different sides of the fastening device (10).

18. Arrangement (30) according to one of the preceding claims, wherein the fastening device (10) comprises a plurality of suction regions (3, 3A, 3B, 3C, 3D) which are expediently arranged at different sides of the fastening device.

19. Arrangement (30) according to claim 18, wherein the fastening device (10) comprises a plurality of fastening units (20) which are mechanically coupled to one another, wherein each fastening unit (20) provides one of the suction regions (3, 3A, 3B) and expediently each fastening unit (20) has an individual housing (2, 2A, 2B) and/or an individual electrically operated vacuum unit.

20. Arrangement (30) according to one of the preceding claims, wherein the fastening device (10) comprises a communication unit.

21. Fastening device, comprising:
- a housing,
- a suction region which is arranged on the housing at the outside and with which the fastening device can be releasably fastened to an underlay, and
- an electrically operated vacuum unit which is arranged in the housing and which is designed to provide a vacuum in the suction region,
**characterized in that**
the fastening device comprises a function unit which is an integral part of the fastening device, and the function unit comprises a guide device, namely a guide rail, a router guide, a milling template and/or a roll guide rail.

22. Method for operating an arrangement (30) according to one of claims 1 to 20, comprising the steps:
- positioning the guide device on an upper side of an underlay (8),
- placing the fastening device (10) with its suction area (3) on the upper side of the underlay (8), wherein the fastening interface (5) is simultaneously placed on the the upper side of the guide device, in particular is brought into engagement therewith,
- after the placement of the fastening device (10) on the underlay (8) and the guide device, activating the electrically operated vacuum unit (4).

## Revendications

1. Ensemble (30) comprenant un dispositif de fixation (10) pour une unité fonctionnelle (1), dans lequel le dispositif de fixation (10) comprend :
- un boîtier (2),
- une zone d'aspiration (3) disposée à l'extérieur sur le boîtier (2), avec laquelle le dispositif de fixation (10) peut être fixé de manière amovible sur un socle (8),
- une interface de fixation (5) pour fixer l'unité fonctionnelle (1), et
- une unité à dépression (4) à fonctionnement électrique disposée dans le boîtier (2), qui est réalisée pour fournir une dépression dans la zone d'aspiration (3),
dans lequel
l'ensemble (30) comprend l'unité fonctionnelle (1), **caractérisé en ce que** l'unité fonctionnelle (1) comprend un système de guidage, à savoir un rail de guidage, un guide de toupie, un gabarit de fraisage et/ou un rail de guidage à rouleaux.

2. Ensemble (30) selon la revendication 1, dans lequel l'interface de fixation (5) est orientée dans la même direction que la zone d'aspiration (3).

3. Ensemble (30) selon l'une quelconque des revendications précédentes, dans lequel l'interface de fixation (5) est réalisée pour maintenir, en particulier pour coincer, l'unité fonctionnelle (1) dans une position posée sur le socle (8) dans un état, dans lequel le dispositif de fixation (10) est fixé sur le socle (8).

4. Ensemble (30) selon l'une quelconque des revendications précédentes, comprenant en outre un accumulateur d'énergie (21) disposé en particulier dans le boîtier (2) et/ou une interface d'accumulateur d'énergie disposée en particulier sur le boîtier (2), destinée à l'installation d'un accumulateur d'énergie.

5. Ensemble (30) selon l'une quelconque des revendications précédentes, dans lequel l'interface de fixation (5) comprend un mécanisme de fixation (7), un coulisseau (12), un levier coudé, un excentrique et/ou un levier rotatif.

6. Ensemble (30) selon l'une quelconque des revendications précédentes, dans lequel le dispositif de fixation (10) comprend en outre un ensemble d'étanchéité et/ou de mise en place (14).

7. Ensemble (30) selon la revendication 6, dans lequel au moins une partie individuelle ou une section de l'ensemble d'étanchéité et/ou de mise en place (14) est réalisée de manière interchangeable.

8. Ensemble (30) selon l'une quelconque des revendications 6 à 7, comprenant en outre un côté d'aspiration, sur lequel la zone d'aspiration (3) est fournie, dans lequel l'ensemble d'étanchéité et/ou de mise en place (14) définit un plan de mise en place destiné à la mise en place sur le socle (8).

9. Ensemble (30) selon la revendication 8, dans lequel le plan de mise en place forme un angle par rapport au côté d'aspiration.

10. Ensemble (30) selon l'une quelconque des revendications 6 à 9, dans lequel l'ensemble d'étanchéité et/ou de mise en place (14) comprend une membrane de capteur de pression.

11. Ensemble (30) selon l'une quelconque des revendications précédentes, dans lequel l'unité à dépression (4) à fonctionnement électrique est réalisée pour fournir deux circuits à dépression.

12. Ensemble (30) selon la revendication 11, dans lequel la zone d'aspiration (3) comprend au moins deux sections d'aspiration (15A, 15B) séparées, dans lequel chaque section d'aspiration (15A, 15B) est associée à un circuit à dépression respectif.

13. Ensemble (30) selon l'une quelconque des revendications précédentes, dans lequel le dispositif de fixation (10) comprend une soupape d'aération (16) pour aérer la zone d'aspiration (3), dans lequel la soupape d'aspiration (16) est couplée à un élément d'utilisation (24).

14. Ensemble (30) selon l'une quelconque des revendications précédentes, dans lequel le dispositif de fixation (10) est réalisé pour mettre en oeuvre une régulation de la dépression.

15. Ensemble (30) selon l'une quelconque des revendications précédentes, dans lequel le dispositif de fixation (10) est réalisé pour détecter un état d'erreur et pour fournir, sur la base de la détection de l'état d'erreur, un signal d'erreur, en particulier un signal d'errer perceptible par un utilisateur.

16. Ensemble (30) selon l'une quelconque des revendications précédentes, dans lequel l'interface de fixation (5) est une première interface de fixation et le dispositif de fixation comprend en outre une deuxième interface de fixation (18).

17. Ensemble (30) selon la revendication 16, dans lequel les deux interfaces de fixation (5, 18) sont disposées sur différents côtés du dispositif de fixation (10).

18. Ensemble selon l'une quelconque des revendications précédentes, dans lequel le dispositif de fixation (10) dispose d'une multitude de zones d'aspiration (3, 3A, 3B, 3C, 3D), qui sont disposées de manière opportune sur différents côtés du dispositif de fixation.

19. Ensemble (30) selon la revendication 18, dans lequel le dispositif de fixation (10) dispose d'une multitude d'unités de fixation (20) couplées mécaniquement les unes sur les autres, dans lequel chaque unité de fixation (20) fournit une des zones d'aspiration (3, 3A, 3B) et de manière opportune chaque unité de fixation (20) dispose d'un boîtier (2, 2A, 2B) propre et/ou d'une unité à dépression à fonctionnement électrique propre.

20. Ensemble (30) selon l'une quelconque des revendications précédentes, dans lequel le dispositif de fixation (10) comprend une unité de communication.

21. Dispositif de fixation comprenant :
- un boîtier,
- une zone d'aspiration disposée à l'extérieur sur le boîtier, avec laquelle le dispositif de fixation peut être fixé de manière amovible sur un socle, et
- une unité à dépression à fonctionnement électrique disposée dans le boîtier, qui est réalisée pour fournir une dépression dans la zone d'aspiration,
**caractérisé en ce que**
le dispositif de fixation comprend une unité fonctionnelle, qui est une partie intégrale du dispositif de fixation, et l'unité fonctionnelle comprend un système de guidage, à savoir un rail de guidage, un guide de toupie, un gabarit de fraisage et/ou un rail de guidage à rouleaux.

22. Procédé pour faire fonctionner un ensemble (30) selon l'une quelconque des revendications 1 à 20, comprenant les étapes :
- de positionnement du système de guidage sur un côté supérieur d'un socle (8),
- de mise en place du dispositif de fixation (10) par sa zone d'aspiration (3) sur le côté supérieur du socle (8), dans lequel dans le même temps l'interface de fixation (5) est mise en place sur le côté supérieur du système de guidage, en particulier est amenée en prise avec celui-ci,
- après la mise en place du dispositif de fixation (10) sur le socle (8) et le système de fixation, d'activation de l'unité à dépression (4) à fonctionnement électrique.
